# EUROPEAN PATENT SPECIFICATION

(11) **EP 1 896 196 B1**
(45) Date of publication and mention of the grant of the patent: **01.12.2010**
(21) Application number: 06711376.1
(22) Date of filing: 04.04.2006
(51) Int. Cl.: B07C 5/32, B07C 5/38

(54) **APPARATUS AND METHOD FOR GRADING AND BATCHING OF ARTICLES**
VORRICHTUNG UND VERFAHREN ZUM KLASSIFIZIEREN UND ZUSAMMENSTELLEN VON ARTIKELN
APPAREIL ET PROCEDE DESTINES A CLASSER ET ALLOTIR DES ARTICLES

(30) Priority: 05.04.2005 IS 7786
(43) Date of publication of application: 12.03.2008
(73) Proprietor: Marel HF., 210 Gardabaer (IS)
(72) Inventor: ELVARSSON, Asgeir, IS-220 Hafnarfjordur (IS); THORSSON, Brynjolfur, IS-108 Reykjavik (IS); SIGURGEIRSSON, Jon, Vidar, IS-203 Kopavogur (IS); ANDRESSON, Bjarni, IS-170 Seltjarnarnes (IS); STEINSSON, Sveinn, Arnar, IS-220 Hafnarfjordur (IS); SIGURDSSON, Gunnar, Tjorvi, IS-210 Gardabaer (IS)
(74) Representative: Arnason Faktor
(86) International application number: PCT/IS2006/000008
(87) International publication number: WO 2006/106532

(56) References cited:
- DE-A1- 3 530 624
- DE-U1- 29 816 577
- US-A- 3 627 127
- US-A- 5 718 321
- PATENT ABSTRACTS OF JAPAN vol. 2002, no. 05, 3 May 2002 (2002-05-03) -& JP 2002 028577 A (YOKOZAKI CO LTD), 29 January 2002 (2002-01-29)

## Description

### Technical Field

The present invention relates to weighing, batching, and packaging of articles for the food industry.

### Background Art

In various industries, articles are sold in batches satisfying various constraints. As an example, articles of non-uniform size, shape or weight, e.g. food articles such as meat, fish, fruit and vegetables, are typically handled and delivered to customers in batches having a substantially uniform characteristics such as size, shape and weight. Typically, a batch of articles must fulfill requirements defined by a contract between a delivering and a receiving party, and most often, minimum weight of the batch is a key issue. Normally, the part of the batch that exceeds the minimum weight is considered by the delivering part as a loss and is often referred to as "giveaway", "overweight" or "over-pack". The complexity of this task is further increased when there are multiple criteria such as weight and color, weight and size grouping, or weight, color and size grouping, for instance. US 3,627,127 discloses an apparatus for sorting articles according to their weight and the characteristics of each series of articles.

Typically, batches are formed by weighing the articles individually, e.g. as they are moved by a conveyer system across a dynamic scale. In a computer system, the weight of each item is compared with weights of a plurality of receptacles, e.g. bins wherein batches are formed. Often, the computer system uses statistical algorithms for assigning specific articles to specific bins under consideration of required minimum weight of the batch and a desire not to produce batches with more overweight, i.e. giveaway, than required under the present conditions, i.e. given the weights of the articles and the required minimum weight of the batches. When there is multiple criteria to meet, such as size grouping, batching and grading; processes are usually cascaded together requiring large facilities to house the batching lines.

### Disclosure of Invention

Batching of "similar" articles often involves the pre-classification of the raw material into some "quality classes". In the present invention "quality classification" and weight batching of multiple "quality classes" is provided in a single space saving apparatus.

Accordingly, the invention in a first aspect provides an apparatus for grading and batching of articles, said apparatus comprising:
- an in-feed station (1),
- one or more weighing means (2),
- means for attaching electronic tags to said articles,
- vertically oriented carousel conveyor (3), said conveyor further comprising:
- plurality of transport buckets (4),
- one or more batch buffers (5), said batch buffers, each, further comprising:
- one or more batching buckets (6),
- one or more batch transfer buffers (7),
- one or more collecting buffers (8),
- one or more packing stations (9),
- computing system,
wherein said computing system is adapted to keep track of all electronic tags attached to each article.

The apparatus consists of an in-feed station for grading of the articles into multiple "quality classes". The articles of each of the classes are weighted by one of multiple weighing means provided. After being weighted the articles are transported in transport buckets via vertically oriented carousel conveying means. The ability to attach multiple electronic tags or labels to each of the articles makes it possible to keep track of each of the articles and allocate them according to class and weight tags into the correct batching buffer.

A vertically oriented carousel conveyor for transferring the articles from the weighing means consists of a base member, with four sprockets, fastened to the base in a rectangular fashion forming two horizontal and two vertical segments. An endless supporting means is mounted on the four sprockets, and a drive means acting on one of the sprockets powers the carousel. Plurality of transport buckets are suspended from the support means using pivoting mechanism such that the transport buckets maintain substantially same position as they are transported by the carousel, through any of the vertical or horizontal segments.

The batching buffers are located in between the two horizontal segments and consists of one ore more batching buckets which collect the batch. In the case when three vertically stacked batching buckets are used, each capable of receiving 1/2 batch, the batching buffer can be used continuously. When the top most batching bucket has received the first 1/2 batch in a batch, the first 1/2 batch is dropped into the middle bucket where the 1/2 batch is stored. When the top most bucket has received the second 1/2 batch, the first 1/2 batch is dropped from the middle bucket to the bottom most bucket and the second 1/2 batch is dropped into the middle bucket, and the top most bucket can now start to receive the first 1/2 of the next batch.

When there is a complete batch in the batching buffer the batch is transported to a collection buffer via batch transport buffer formed by a group of adjacent transport buckets on the carousel conveyor as they travel the lower horizontal segment. Thus the transport buckets are used twice: First, to transport individual articles to the batching buffers and the second time, to transport an entire batch to the collecting buffer. A computer system is used to control: the conveying means, the transport buckets, the batching buffer, the batch transfer buffer, the collecting buffer, and to keep track of the different electronic tags. The computing system may consist of conventional hardware such as PC computer adapted to for use in the above described system. As well as custom made computing system composed of: central processing unit, random access memory, non-volatile memory storage, and other necessary components and interconnects. Regardless of what computing system is used, input modules and output modules, are needed as well as program code which encodes computer executable instructions which when loaded into memory and executed by the central processing unit controls the entire system via the output modules according to the input signals and the algorithms embedded in the program code.

In a second aspect, the invention provides a method for grading and batching of articles, said method comprising steps of:
- grading the articles in the in-feed station (1) into multiple "quality classes",
- automatically or manually attaching "electronic quality tag" to each article,
- weighing of each article in one of the weighing means (2),
- attaching "electronic weight tag" to each article,
- transporting the graded and weighted articles in transport buckets using vertically oriented carousel conveyor (3),
- releasing the articles from the transport buckets into the batching buffer (5) associated with the "quality tag" attached to the item(s) in the transport bucket,
- releasing the articles from the top most batching bucket into the middle batching bucket when the top most batching bucket has received 1/2 batch, and
- further releasing the 1/2 batch from the middle batching bucket into the bottom most batching bucket when the top most batching bucket has received the second 1/2 batch, and then
- releasing the second 1/2 batch of articles from the top most batching bucket into the middle batching bucket,
- releasing the entire batch from the middle and bottom most batching bucket into the batch transfer buffer (7) which is composed of several adjacent transport buckets (4),
- releasing the entire batch from the batch transfer buffer (7) into one of the collecting buffer(s) (8),
- releasing the batch into a packing container at one or more packing stations (9).

### Brief Description of Drawings

Figure 1, shows side view of the apparatus for grading and batching.

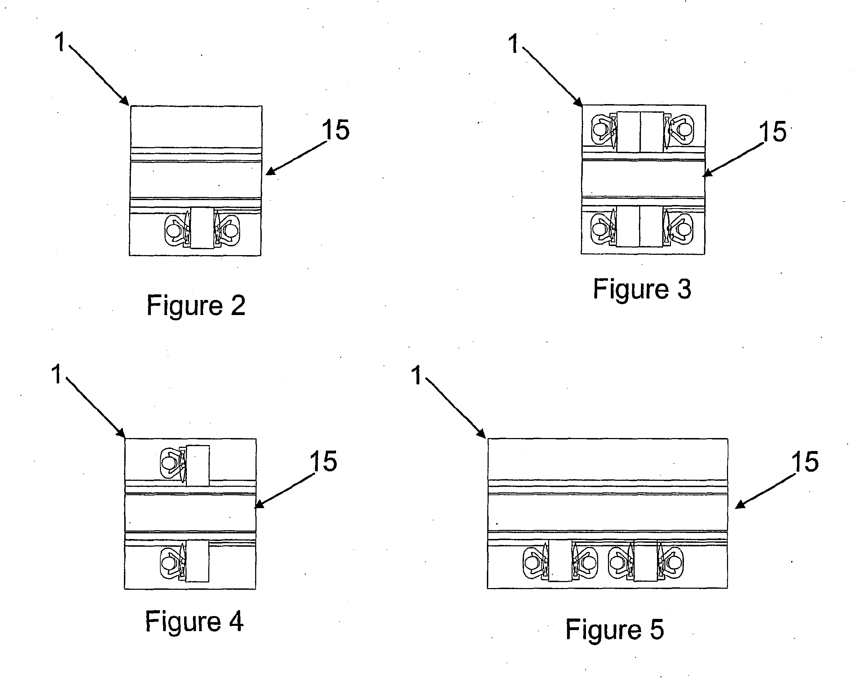

Figures 2-5, shows four different configurations of the in-feed station.

### Detailed description

Batching of "similar" articles often involves the pre-classification of the raw material into some "quality classes". In the present invention "quality classification" and weight batching of multiple "quality classes" is provided in a single space saving apparatus.

An apparatus for grading and batching of articles is proposed. The apparatus consists of an in-feed station for grading of the articles into multiple "quality classes". The articles of each of the classes are weighted by one of multiple weighing means provided. The ability to attach multiple electronic tags or labels to each of the articles makes it possible to keep track of each of the articles and allocate them according to class and weight tags into the correct batching buffer. After being weighted the articles are transported in transport buckets via vertically oriented carousel conveying means.

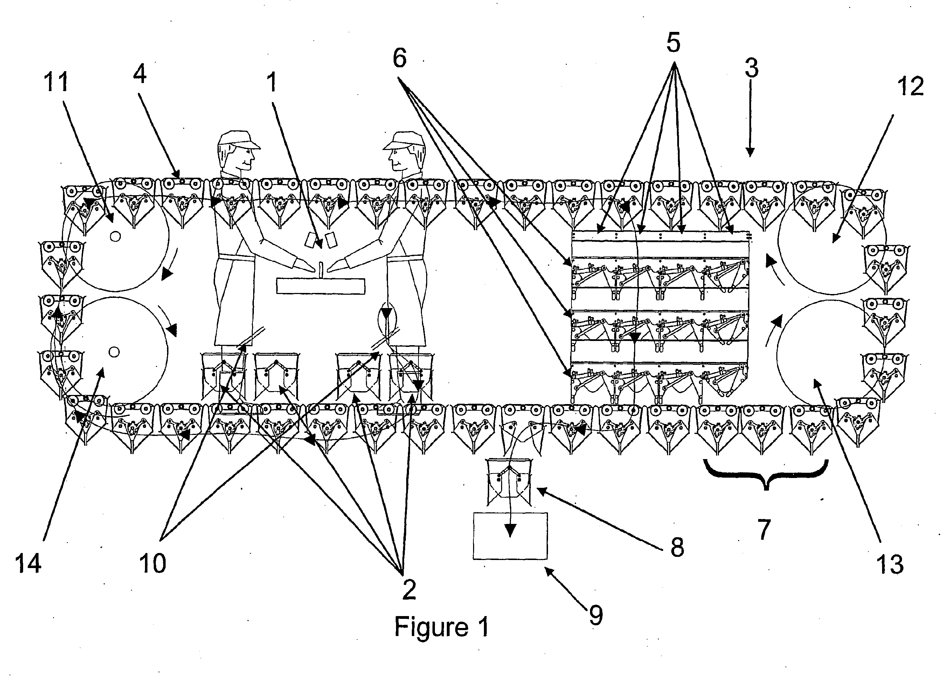

In one preferred embodiment (figure 1), the carousel consists of a base member, with four sprockets, (11), (12), (13), (14), fastened to the base in a rectangular fashion; the sprocket (11) being the top-left sprocket, (12) the top-right sprocket, (13) the bottom-right sprocket and (14) the bottom-left sprocket. An endless supporting means mounted on the four sprockets, and a drive means acting on one of the sprockets. A plurality of transport buckets are suspended from the support means using pivoting mechanism such that said transport buckets maintain substantially same position as they are transported by the carousel, through the upper horizontal segment from sprocket (11) to sprocket (12), through the first vertical segment from sprocket (12) to sprocket (13), through the lower horizontal segment from sprocket (13) to sprocket (14), and through the second vertical segment from sprocket (14) to sprocket (11).

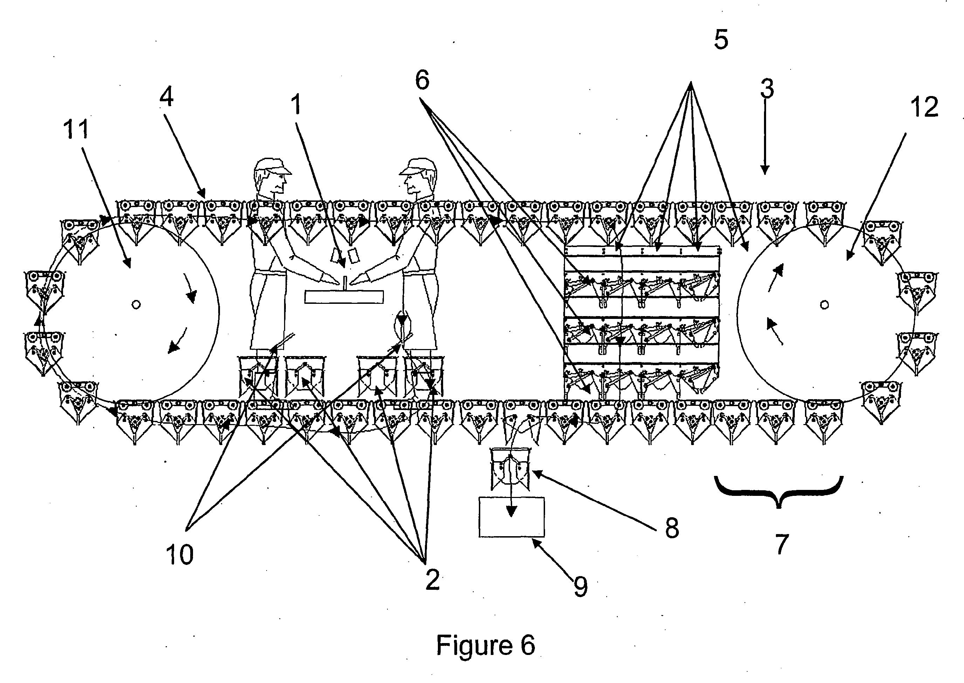

In one preferred embodiment (figure 6), the carousel consists of a base member, with two sprockets, (11), (12), fastened to the base; the sprocket (11) being the left most sprocket, (12) the right most sprocket. An endless supporting means mounted on the two sprockets, and a drive means acting on one of the sprockets. A plurality of transport buckets are suspended from the support means using pivoting mechanism such that said transport buckets maintain substantially same position as they are transported by the carousel, through the upper horizontal segment from sprocket (11) to sprocket (12), and through the lower horizontal segment from sprocket (12) to sprocket (11).

The batching buffers are located in between the Horizontal segments and consists of one ore more batching buckets which collect the batch. In the case when three vertically stacked batching buckets are used, each capable of receiving 1/2 batch, the batching buffer can be used continuously.

When the top most batching bucket has received the first 1/2 batch in a batch, the first 1/2 batch is dropped into the middle bucket where the 1/2 batch is stored. As soon as the bottom most bucket becomes available the 1/2 batch is released from the middle batching bucket into the bottom most batching bucket. When the top most bucket has received the second 1/2 batch the entire batch is released from the middle and bottom most batching bucket into the batch transfer buffer (7) which is composed of one or more transport buckets (4),

Thus the transport buckets are used twice: Firstly, to transport individual articles to the batching buffers and secondly, to transport entire batch to the collecting buffer. A computer system is used to control: the conveying means, the transport buckets, the batching buffer, the batch transfer buffer, the collecting buffer, and to keep track of the different electronic tags. The computing system may consist of conventional hardware such as PC computer adapted to for use in the above described system. As well as custom made computing system composed of: central processing unit, random access memory, non-volatile memory storage, and other necessary components and interconnects. Regardless of what computing system is used, input modules and output modules, are needed as well as program code which encodes computer executable instructions which when loaded into memory and executed by the central processing unit controls the entire system via the output modules according to the input signals and the algorithms embedded in the program code.

## Claims

1. An apparatus for grading and batching of articles, said apparatus comprising:
- an in-feed station (1),
- one or more weighing means (2),
- means for attaching electronic tags to said articles,
- vertically oriented carousel conveyor (3),
- one or more packing stations (9),
- computing system,
**characterized in that** said apparatus further comprising
- one or more batch buffers (5), said batch buffers, each, further comprising:
- one or more batching buckets (6),
- one or more batch transfer buffers (7),
- one or more collecting buffers (8),
wherein said conveyor further comprises a plurality of transport buckets (4), and wherein said computing system is adapted to keep track of all electronic tags attached to each article.

2. An apparatus according to claim 1, wherein an electronic quality tag is attached to said articles by manually operated device as said articles depart from said in-feed station (1).

3. An apparatus according to claim 1, wherein an electronic quality tag is attached to said articles by automatically operated device as said articles depart from said in-feed station (1).

4. An apparatus according to any of the preceding claims, wherein diverting means (10) divert the article to a weighing means (2) associated with the electronic quality tag assigned to the article.

5. An apparatus according to any of the preceding claims, wherein the operator diverts the article to a weighing means associated with the electronic quality tag assigned to the article.

6. An apparatus according to any of the preceding claims, wherein said weighing means is comprised of:
- a hopper, and
- an electronic scale.

7. An apparatus according to any of the preceding claims, wherein weight tag is attached to each article weighed by said weighing means.

8. An apparatus according to any of the preceding claims, wherein said carousel conveyor comprises:
- a base member,
- one or more sprockets, wherein said sprockets are fastened to said base member,
- an endless supporting means, said supporting means mounted on said four sprockets,
- drive means acting on one of said sprockets, and
- plurality of said transport buckets,
wherein said transport buckets are suspended from said support means on a pivoting means such that said transport buckets maintain substantially same position as they are transported by the carousel.

9. An apparatus according to any of the preceding claims, wherein said carousel conveyor comprises:
- a base member,
- two sprockets (11), (12), wherein said two sprockets are fastened to said base member, the sprocket (11) being the left most sprocket, (12) the right most sprocket
- an endless supporting means, said supporting means mounted on said four sprockets,
- drive means acting on one of said sprockets, and
- plurality of said transport buckets,
wherein said transport buckets are suspended from said support means on a pivoting means such that said transport buckets maintain substantially same position as they are transported by the carousel, through the upper horizontal segment from sprocket (11) to sprocket (12), and through the lower horizontal segment from sprocket (12) to sprocket (11).

10. An apparatus according to any of the preceding claims, wherein said carousel conveyor comprises:
- a base member,
- four sprockets, (11), (12), (13), (14), wherein said four sprockets are fastened to said base member in rectangular fashion, (11) being the top-left sprocket, (12) the top-right sprocket, (13) the bottom-right sprocket and (14) the bottom-left sprocket,
- an endless supporting means, said supporting means mounted on said four sprockets,
- drive means acting on one of said sprockets, and
- plurality of said transport buckets,
wherein said transport buckets are suspended from said support means on a pivoting means such that said transport buckets maintain substantially same position as they are transported by the carousel, through the upper horizontal segment from sprocket (11) to sprocket (12), through the first vertical segment from sprocket (12) to sprocket (13), through the lower horizontal segment from sprocket (13) to sprocket (14), and through the second vertical segment from sprocket (14) to sprocket (11).

11. An apparatus according to any of the preceding claims, wherein said plurality of batch buffers (5), each, comprise:
- one or more batching buckets (6),
wherein batching buffer of three batching buckets(6) provides for continuous use of said batching buffer (5).

12. An apparatus according to any of the preceding claims, wherein said one or more batch transfer buffers (7) comprise the reuse of one ore more of said transport buckets (4) as they travel said lower horizontal segment towards said in-feed station (1).

13. An apparatus according to any of the preceding claims, wherein said computing system comprises:
- central processing unit,
- random access memory,
- non-volatile memory storage,
- input modules,
- output modules,
- program code, encoding computer executable instructions,
wherein said computing system receives input signals from said input modules and executes the instructions encoded in said program code according to said input signals and preset values set by the operator.

14. A method for grading and batching of articles, said method comprising steps of:
- grading the articles in the in-feed station (1) into multiple "quality classes",
- automatically or manually attaching "electronic quality tag" to each article,
- weighing of each article in one of the weighing means (2),
- attaching "electronic weight tag" to each article,
- transporting the graded and weighted articles in transport buckets using vertically oriented carousel conveyor (3),
- releasing the batch into a packing container at one or more packing stations (9),
**characterized in**
- releasing the articles from the transport buckets into the batching buffer (5) associated with the "quality tag" attached to the item(s) in the transport bucket,
- releasing the articles from the top most batching bucket into the middle batching bucket when the top most batching bucket has received 1/2 batch, and
- further releasing the 1/2 batch from the middle batching bucket into the bottom most batching bucket as soon as it becomes available for batching, and then
- releasing the second 1/2 batch of articles from the top most batching bucket into the middle batching bucket,
- releasing the entire batch from the middle and bottom most batching bucket into the batch transfer buffer (7) which is composed of one or more transport buckets (4),
- releasing the entire batch from the batch transfer buffer (7) into one of the collecting buffer(s) (8).

## Patentansprüche

1. Vorrichtung zum Sichten und Stapeln von Artikeln, wobei die Vorrichtung enthält:
- eine Zufuhrstation (1),
- ein oder mehrere Wiegemittel (2),
- Mittel zum Befestigen elektronischer Etiketten an den Artikeln,
- eine vertikal orientierte Karussell-Fördereinrichtung (3),
- eine oder mehrere Verpackungsstationen (9),
- ein Rechensystem,
**dadurch gekennzeichnet, dass** die Vorrichtung ferner enthält:
- einen oder mehrere Stapelpuffer (5), wobei die Stapelpuffer jeweils ferner enthalten:
- einen oder mehrere Stapelkörbe (6),
- einen oder mehrere Stapelumladepuffer (7),
- einen oder mehrere Sammelpuffer (8),
wobei die Fördereinrichtung ferner mehrere Transportkörbe (4) enthält und wobei das Rechensystem dazu ausgelegt ist, sämtliche elektronischen Etiketten, die an jedem Artikel befestigt sind, nachzuverfolgen.

2. Vorrichtung nach Anspruch 1, wobei ein elektronisches Qualitätsetikett an den Artikeln durch manuell betätigte Vorrichtungen befestigt wird, wenn die Artikel die Zufuhrstation (1) verlassen.

3. Vorrichtung nach Anspruch 1, wobei ein elektronisches Qualitätsetikett an den Artikeln durch eine automatisch betätigte Vorrichtung befestigt wird, wenn die Artikel die Zufuhrstation (1) verlassen.

4. Vorrichtung nach einem der vorhergehenden Ansprüche, wobei Abzweigmittel (10) die Artikel zu einem Wiegemittel (2) abzweigen, das dem dem Artikel zugewiesenen elektronischen Qualitätsetikett zugeordnet ist.

5. Vorrichtung nach einem der vorhergehenden Ansprüche, wobei die Bedienungsperson den Artikel zu einem Wiegemittel abzweigt, das dem dem Artikel zugewiesenen elektronischen Qualitätsetikett zugeordnet ist.

6. Vorrichtung nach einem der vorhergehenden Ansprüche, wobei das Wiegemittel enthält:
- einen Trichter und
- eine elektronische Waage.

7. Vorrichtung nach einem der vorhergehenden Ansprüche, wobei das Wiegeetikett an jedem Artikel, der durch das Wiegemittel gewogen wird, befestigt ist.

8. Vorrichtung nach einem der vorhergehenden Ansprüche, wobei die Karussell-Fördereinrichtung enthält:
- ein Basiselement,
- einen oder mehrere Zähne, wobei die Zähne an dem Basiselement befestigt sind,
- ein Endlosunterstützungsmittel, wobei das Unterstützungsmittel an den vier Zähnen angebracht ist,
- Antriebsmittel, die auf einen der Zähne einwirken, und
- mehrere der Transportkörbe,
wobei die Transportkörbe an den Unterstützungsmitteln über ein Schwenkmittel aufgehängt sind, derart, dass die Transportkörbe im Wesentlichen dieselbe Stellung beibehalten, wenn sie mittels des Karussells transportiert werden.

9. Vorrichtung nach einem der vorhergehenden Ansprüche, wobei die Karussell-Fördereinrichtung enthält:
- ein Basiselement,
- zwei Zähne (11), (12), wobei die zwei Zähne an dem Basiselement befestigt sind, wobei ein Zahn (11) der der am weitesten links befindliche Zahn ist und der andere Zahn (12) der am weitesten rechts befindliche Zahn ist,
- ein Endlosunterstützungsmittel, wobei das Unterstützungsmittel an den vier Zähnen angebracht ist,
- Antriebsmittel, die auf einen der Zähne einwirken, und
- der Transportkörbe,
wobei die Transportkörbe an den Unterstützungsmittel über ein Schwenkmittel aufgehängt sind, derart, dass die Transportkörbe dieselbe Stellung im Wesentlichen beibehalten, wenn sie durch das Karussell durch das obere horizontale Segment vom Zahn (11) zum Zahn (12) und durch das untere horizontale Segment vom Zahn (12) zum Zahn (11) transportiert werden.

10. Vorrichtung nach einem der vorhergehenden Ansprüche, wobei die Karussell-Fördereinrichtung enthält:
- ein Basiselement,
- vier Zähne (11), (12), (13), (14), wobei die vier Zähne an dem Basiselement rechtwinklig befestigt sind, wobei (11) der Zahn links oben ist, (12) der Zahn rechts oben ist, (13) der Zahn rechts unten ist und (14) links unten ist,
- ein Endlosunterstützungsmittel, wobei das Unterstützungsmittel an den vier Zähnen angebracht ist,
- Antriebsmittel, die auf einen der Zähne einwirken, und
- mehrere der Transportkörbe,
wobei die Transportkörbe an den Unterstützungsmittel über ein Schwenkmittel aufgehängt sind, derart, dass die Transportkörbe dieselbe Stellung im Wesentlichen beibehalten, wenn sie durch das Karussell durch das obere horizontale Segment vom Zahn (11) zum Zahn (12), durch das erste vertikale Segment vom Zahn (12) zum Zahn (13), durch das untere horizontale Segment vom Zahn (13) zum Zahn (14) und durch das zweite vertikale Segment vom Zahn (14) zum Zahn (11) transportiert werden.

11. Vorrichtung nach einem der vorhergehenden Ansprüche, wobei die mehreren Stapelpuffer (5) jeweils enthalten:
- einen oder mehrere Stapelkörbe (6),
wobei der Stapelpuffer aus drei Stapelkörben (6) eine ununterbrochene Verwendung des Stapelpuffers (5) schafft.

12. Vorrichtung nach einem der vorhergehenden Ansprüche, wobei der eine oder die mehreren Stapelumladepuffer (7) die Neuverwendung eines oder mehrerer der Transportkörbe (4) enthalten, wenn sie sich durch das untere horizontale Segment zu der Zufuhrstation (1) bewegen.

13. Vorrichtung nach einem der vorhergehenden Ansprüche, wobei das Rechensystem enthält:
- eine Zentraleinheit,
- einen Schreib-Lese-Speicher,
- einen nichtflüchtigen Speicher,
- Eingabemodule,
- Ausgabemodule,
- Programmcode, der computerausführbare Befehle codiert,
wobei das Rechensystem Eingangssignale von den Eingabemodulen empfängt und die Befehle, die in dem Programmcode ausgeführt sind, in Übereinstimmung mit den Eingangssignalen und mit im Voraus festgelegten Werten, die durch die Bedienungsperson festgelegt werden, ausführt.

14. Verfahren zum Sichten und Stapeln von Artikeln, wobei das Verfahren die folgenden Schritte umfasst:
- Sichten der Artikel in der Zufuhrstation (1) in mehrere "Qualitätsklassen",
- automatisches oder manuelles Befestigen eines "elektronischen Qualitätsetiketts" an jedem Artikel,
- Wiegen jedes Artikels in einem der Wiegemittel (2),
- Befestigen eines "elektronischen Gewichtsetiketts" an jedem Artikel,
- Transportieren der gesichteten und gewogenen Artikel in Transportkörben unter Verwendung einer vertikal orientierten Karussell-Fördereinrichtung (3),
- Entleeren des Korbs in einen Verpackungsbehälter an einer oder mehreren Verpackungsstationen (9),
**gekennzeichnet durch**
- Entleeren der Artikel aus den Transportkörben in den Stapelpuffer (5), der dem "Qualitätsetikett" zugeordnet ist, das an dem oder den Elementen in dem Transportkorb befestigt ist,
- Entleeren der Artikel von dem obersten Stapelkorb in den mittleren Stapelkorb, wenn der oberste Stapelkorb einen halben Stapel aufgenommen hat, und
- weiteres Entleeren des halben Stapels von dem mittleren Stapelkorb in den untersten Stapelkorb, sobald er für das Stapeln verfügbar wird, und dann
- Entleeren des zweiten halben Stapels von Artikeln von dem obersten Stapelkorb in den mittleren Stapelkorb,
- Entleeren des gesamten Stapels von dem mittleren und dem untersten Stapelkorb in den Stapelumladepuffer (7), der aus einem oder mehreren Transportkörben (4) gebildet ist,
- Entleeren des gesamten Stapels aus dem Stapelumladepuffer (7) in einen der Sammelpuffer (8).

## Revendications

1. Appareil pour classer et allotir des articles, ledit appareil comprenant:
- une station d'alimentation (1),
- un ou plusieurs moyen(s) de pesage (2),
- des moyens pour attacher des étiquettes électroniques auxdits articles,
- un convoyeur carrousel orienté verticalement (3),
- une ou plusieurs stations d'emballage (9),
- un système de calcul,
**caractérisé en ce que** ledit appareil comprend en outre,
- un ou plusieurs accumulateur(s) de lot (5), lesdits accumulateurs de lots comprenant chacun en outre:
- un ou plusieurs godet(s) d'allotissement (6),
- un ou plusieurs accumulateur(s) de transfert de lots (7),
- un ou plusieurs accumulateur(s) de collecte (8),
dans lequel ledit convoyeur comprend en outre une pluralité de godets de transport (4), et dans lequel ledit système de calcul est adapté pour garder la trace de toutes les étiquettes électroniques qui sont attachées à chaque article.

2. Appareil selon la revendication 1, dans lequel une étiquette électronique de qualité est attachée auxdits articles à l'aide d'un dispositif actionné manuellement lorsque lesdits articles sortent de ladite station d'alimentation (1).

3. Appareil selon la revendication 1, dans lequel une étiquette électronique de qualité est attachée auxdits articles à l'aide d'un dispositif actionné de façon automatique lorsque lesdits articles sortent de ladite station d'alimentation (1).

4. Appareil selon l'une quelconque des revendications précédentes, dans lequel des moyens de déviation (10) dévient l'article vers des moyens de pesage (2) qui sont associés à l'étiquette électronique de qualité qui est attribuée à l'article.

5. Appareil selon l'une quelconque des revendications précédentes, dans lequel l'opérateur dévie l'article vers des moyens de pesage qui sont associés à l'étiquette électronique de qualité qui est attribuée à l'article.

6. Appareil selon l'une quelconque des revendications précédentes, dans lequel lesdits moyens de pesage sont constitués:
- d'une trémie, et
- d'une bascule électronique.

7. Appareil selon l'une quelconque des revendications précédentes, dans lequel une étiquette de poids est attachée à chaque article qui est pesé par lesdits moyens de pesage.

8. Appareil selon l'une quelconque des revendications précédentes, dans lequel ledit convoyeur carrousel comprend:
- un élément de base,
- un ou plusieurs pignon(s), dans lequel ledit (lesdits) pignons est (sont) attaché(s) audit élément de base,
- des moyens de support sans fin, lesdits moyens de support étant montés sur ledit/lesdits un ou plusieurs pignon(s),
- des moyens d'entraînement qui agissent sur un desdits pignons, et
- une pluralité desdits godets de transport,
dans lequel lesdits godets de transport sont suspendus auxdits moyens de support sur des moyens de pivot, de telle sorte que lesdits godets de transport conservent sensiblement la même position lorsqu'ils sont transportés par le carrousel.

9. Appareil selon l'une quelconque des revendications précédentes, dans lequel ledit convoyeur carrousel comprend:
- un élément de base,
- deux pignons (11), (12), dans lequel lesdits deux pignons sont attachés audit élément de base, le pignon (11) étant le pignon situé le plus à gauche, et le pignon (12) étant le pignon situé le plus à droite,
- des moyens de support sans fin, lesdits moyens de support étant montés sur lesdits deux pignons,
- des moyens d'entraînement qui agissent sur un desdits pignons, et
- une pluralité desdits godets de transport,
dans lequel lesdits godets de transport sont suspendus auxdits moyens de support sur des moyens de pivot, de telle sorte que lesdits godets de transport conservent sensiblement la même position lorsqu'ils sont transportés par le carrousel, à travers le segment horizontal supérieur du pignon (11) au pignon (12), et à travers le segment horizontal inférieur du pignon (12) au pignon (11).

10. Appareil selon l'une quelconque des revendications précédentes, dans lequel ledit convoyeur carrousel comprend:
- un élément de base,
- quatre pignons (11), (12), (13), (14), dans lequel lesdits quatre pignons sont attachés audit élément de base de façon rectangulaire, le pignon (11) étant le pignon supérieur gauche, le pignon (12) étant le pignon supérieur droit, le pignon (13) étant le pignon inférieur droit, et le pignon (14) étant le pignon inférieur gauche,
- des moyens de support sans fin, lesdits moyens de support étant montés sur lesdits quatre pignons,
- des moyens d'entraînement qui agissent sur un desdits pignons, et
- une pluralité desdits godets de transport,
dans lequel lesdits godets de transport sont suspendus auxdits moyens de support sur des moyens de pivot, de telle sorte que lesdits godets de transport conservent sensiblement la même position lorsqu'ils sont transportés par le carrousel, à travers le segment horizontal supérieur du pignon (11) au pignon (12), à travers le premier segment vertical du pignon (12) au pignon (13), à travers le segment horizontal inférieur du pignon (13) au pignon (14), et à travers le deuxième segment vertical du pignon (14) au pignon (11).

11. Appareil selon l'une quelconque des revendications précédentes, dans lequel les accumulateurs de ladite pluralité d'accumulateurs de lots (5) comprennent chacun:
- un ou plusieurs godet(s) d'allotissement (6), dans lequel l'accumulateur d'allotissement de trois godets d'allotissement (6) assure une utilisation continue dudit accumulateur d'allotissement (5).

12. Appareil selon l'une quelconque des revendications précédentes, dans lequel ledit/lesdits un ou plusieurs accumulateur(s) de transfert de lots (7) comprend/comprennent la réutilisation d'un ou de plusieurs desdits godets de transport (4) lorsqu'il(s) traverse(nt) ledit segment horizontal inférieur en direction de ladite station d'alimentation (1).

13. Appareil selon l'une quelconque des revendications précédentes, dans lequel ledit système de calcul comprend:
- une unité centrale de traitement,
- une mémoire vive,
- une mémoire de stockage non volatile,
- des modules d'entrée,
- des modules de sortie,
- un code de programme pour encoder des instructions exécutables par ordinateur,
dans lequel ledit système de calcul reçoit des signaux d'entrée en provenance desdits modules d'entrée et exécute les instructions qui sont encodées dans ledit code de programme sur la base desdits signaux d'entrée et de valeurs préétablies définies par l'opérateur.

14. Procédé pour classer et allotir des articles, ledit procédé comprenant les étapes suivantes:
- classer les articles dans la station d'alimentation (1) en multiples "classes de qualité",
- attacher de façon automatique ou manuelle une "étiquette électronique de qualité" à chaque article,
- peser chaque article dans l'un des moyens de pesage (2),
- attacher une "étiquette électronique de poids" à chaque article,
- transporter les articles classés et pesés dans des godets de transport en utilisant un convoyeur carrousel orienté verticalement (3),
- libérer le lot dans un conteneur d'emballage à une ou plusieurs station(s) d'emballage (9),
**caractérisé par** les étapes suivantes:
- libérer les articles des godets de transport dans l'accumulateur d'allotissement (5) qui est associé à "l'étiquette de qualité" qui est attachée à l'article/aux articles dans le godet de transport,
- libérer les articles du godet d'allotissement situé le plus à gauche dans le godet d'allotissement du milieu lorsque le godet d'allotissement supérieur a reçu un demi-lot, et
- libérer en outre le demi-lot du godet d'allotissement du milieu dans le godet d'allotissement inférieur aussitôt qu'il devient disponible pour être alloti, et ensuite
- libérer le deuxième demi-lot d'articles du godet d'allotissement supérieur dans le godet d'allotissement du milieu,
- libérer le lot entier des godets d'allotissement inférieur et du milieu dans l'accumulateur de transfert de lots (7) qui est constitué d'un ou de plusieurs godet(s) de transport (4), et
- libérer le lot entier de l'accumulateur de transfert de lots (7) dans l'un des accumulateur(s) de collecte (8).
